# EUROPÄISCHE PATENTSCHRIFT

(11) **EP 3 395 632 B1**
(45) Veröffentlichungstag und Bekanntmachung des Hinweises auf die Patenterteilung: **26.10.2022**
(21) Anmeldenummer: 18167312.0
(22) Anmeldetag: 13.04.2018
(51) Int. Cl.: B60W 30/095, G05D 1/02, B62D 15/02

(54) **AUTOMATISCHES UND KOLLABORATIVES FAHRERLOSES TRANSPORTSYSTEM**
AUTOMATIC AND COLLABORATIVE DRIVERLESS TRANSPORT SYSTEM
SYSTÈME DE TRANSPORT AUTOMATIQUE ET COLLABORATIF SANS CONDUCTEUR

(30) Priorität: 24.04.2017 DE 102017108659
(43) Veröffentlichungstag der Anmeldung: 31.10.2018
(73) Patentinhaber: Schiller Automatisierungstechnik GmbH, 94486 Osterhofen (DE)
(72) Erfinder: Stoiber, Peter, 94209 Regen (DE); Schneider, Manfred, 94474 Vilshofen (DE); Heringlehner, Markus, 94060 Pocking (DE); Vogl, Andreas, 94469 Deggendorf (DE)
(74) Vertreter: Wittmann, Günther

(56) Entgegenhaltungen:
- EP-A2- 1 533 776
- WO-A1-2016/011557
- DE-A1-102012 006 738
- DE-A1-102013 000 199
- DE-A1-102014 107 917

## Beschreibung

Die vorliegende Erfindung betrifft ein innovatives, automatisches und kollaboratives Versorgungssystem, insbesondere ein innovatives, automatisches und kollaboratives fahrerloses Transportsystem, das ein Zugfahrzeug und zumindest einen Anhänger aufweist. Derartige automatisch fahrende Transportsysteme dürfen nicht mit einem Hindernis oder einer Person kollidieren oder einen vorbestimmten Mindestabstand zu diesen unterschreiten.

### Stand der Technik

Im Stand der Technik sind Routenzüge, die auf einem fahrerlosen Transportsystem beruhen, bekannt, die sich automatisch durch Fertigungsbereiche bewegen können. Teilweise navigieren diese Transportsysteme durch im Boden eingelassene Drähte. Sobald das fahrerlose Transportsystem erkennt, dass sich auf der Bahn oder in der Nähe der Bahn ein Hindernis befindet, stoppt das fahrerlose Transportsystem. Teilweise sind im Stand der Technik Sensoren an den Anhängern angeordnet, um zu verhindern, dass die Anhänger mit einem Hindernis kollidieren bzw. einen zu geringen Abstand zu Hindernissen aufweisen. Die fahrerlosen Transportsysteme des Standes der Technik erkennen Hindernisse mittels optischer Sensoren mit lenkwinkelabhängigen Schutzfeldern.

Die DE 10 2005 058 628 B4 beschreibt, dass eine erste Sensoreinrichtung am Zugfahrzeug und wenigstens eine zweite Sensoreinrichtung an einem Anhänger oder Auflieger eines mehrgliedrigen Zuges angeordnet ist und dass zur Erfassung des Anhängerwinkels und Deichselwinkels zwischen dem Zugfahrzeug und Anhänger oder Auflieger ein Winkelgebersystem vorgesehen ist.

Die DE 10 2012 006 738 A1 offenbart, dass ein Objekt (Zugfahrzeug oder Anhänger) die Richtung, Position oder Lage mindestens eines anderen Objektes (Zugfahrzeug oder Anhänger) aus der Gruppe erfasst und mit einem Sollwert vergleicht.

Die DE 10 2010 025 612 A1 offenbart das Warnen eines Fahrers eines Lastzuges. Es werden die seitlichen Fahrbahngrenzen, die von den Rädern der Vorderachse des Fahrzeuges nicht befahren werden dürfen, um ein seitliches Überschreiten der ermittelten Fahrbahngrenzen durch das Fahrzeug im weiteren Fahrbahnverlauf zu verhindern, ermittelt. Ferner wird die vorausliegende Fahrstrecke auf Basis der aktuellen Routenführung des Navigationssystems oder die wahrscheinliche Fahrstrecke in Abhängigkeit der aktuellen Position ermittelt. Es können die Sensoren von Spurhalteassistenten verwendet werden, um die Position des Fahrzeuges genauer zu bestimmen.

Die DE 10 2014 107 917 A1 offenbart ein Verfahren und eine Vorrichtung zum Vermeiden einer Kollision eines ein Kraftfahrzeug und einen Anhänger umfassenden Gespanns mit einem Hindernis. Zumindest ein Anhängerabmessungswert soll mit einer optischen Erfassungseinrichtung des Kraftfahrzeuges ermittelt werden. Die Steuerungseinrichtung ermittelt anhand eines erfassten Hindernisses und der erfassten Bewegung und dem zumindest einen Kraftfahrzeugabmessungswert und dem zumindest einen Anhängerabmessungswert eine Möglichkeit der Kollision fortlaufend.

Sensoren an den Anhängern sind unerwünscht, da sie eine aufwändige Verkabelung sowie ein fehlerträchtiges Verbinden und Lösen elektrischer Steckverbinder beim Ankoppeln bzw. Abkoppeln von Anhängern erfordern. Derartige elektrische Steckverbinder sowie Sensoren an den Anhängern sind anfällig gegenüber Beschädigungen, Verschmutzungen, Fehlbedienungen oder dergleichen und verursachen zusätzliche Aufwände.

Die Erfindung stellt sich zur Aufgabe, ein verbessertes fahrerloses Transportsystem zu schaffen, das eine Kollision mit Hindernissen vermeidet, ohne dass an den Anhängern Sensoren angeordnet sind.

### Kurze Beschreibung der Erfindung

Die Aufgabe der Erfindung wird durch ein Verfahren nach Anspruch 1 und ein automatisch fahrendes Zugfahrzeug nach Anspruch 8 gelöst.

Das erfindungsgemäße Verfahren prüft, ob ein automatisch fahrendes fahrerloses Transportsystem mit zumindest einem Zugfahrzeug mit einem Hindernissensorsystem und zumindest einem Anhänger, eine Kurve fahren kann, ohne einen Mindestabstand zu einem Hindernis zu unterschreiten, wobei keiner der Anhänger einen Hindernissensor (Sensor zur Ermittlung des Abstandes zu einem Hindernis), keinen Sensor zum Ermitteln der Position und/oder Orientierung eines Fahrzeuges des fahrerlosen Transportiersystems und/oder keinen Sensor zur Ermittlung des Deichselwinkels aufweist. Das Verfahren ermittelt den geplanten Weg, den das automatisch fahrende fahrerlose Transportsystem fahren soll, als Soll-Positionen bzw. als Soll-Weg. Die Mehrzahl Soll-Positionen entlang des Weges bilden den Soll-Weg. Das erfindungsgemäße Verfahren ermittelt anschließend die Einhüllende der Soll-Schleppkurve jedes des zumindest einen Anhängers auf Grundlage des geplanten Weges. Das erfindungsgemäße Verfahren ermittelt den hindernisfreien Soll-Bereich, in dem sich kein Hindernis befinden darf, auf Grundlage des geplanten Weges (Soll-Schleppkurve) und der Einhüllenden der Soll-Schleppkurve eines jeden der Anhänger. Der hindernisfreie Bereich kann als Funktion der Soll-Position berechnet werden, beispielsweise als Funktion der Soll-Position des Zugfahrzeuges. Die Position im Sinne der vorliegenden Erfindung kann ein beliebiges Koordinatensystem umfassen und der Ausdruck Position umfasst sowohl eine Absolutposition als auch eine Relativposition. Das Verfahren ermittelt potentielle Hindernisse mittels des am Zugfahrzeug angeordneten Hindernissensorsystems. Ferner ermittelt das Verfahren die Ist-Position des Zugfahrzeuges des fahrerlosen Transportsystems. Das Verfahren speichert die Ist-Position eines Hindernisses bzw. die Ist-Positionen einer Mehrzahl von Hindernissen und/oder des hindernisfreien Ist-Bereichs in Abhängigkeit der Ist-Position des Zugfahrzeuges.

Anschließend beginnt das Zugfahrzeug eine Kurvenfahrt oder führt diese fort, wenn es bereits eine Kurve fährt. Die Kurvenfahrt kann eine geplante Kurvenfahrt aufgrund von Routenvorgaben sein. Das Zugfahrzeug ermittelt potentielle Hindernisse mittels des am Zugfahrzeug angeordneten Hindernissensorsystems. Die Ist-Position des Zugfahrzeuges des fahrerlosen Transportsystems wird gespeichert. Die Ist-Position eines Hindernisses bzw. die Ist-Positionen einer Mehrzahl Hindernisse und/oder der hindernisfrei Ist-Bereich werden in Abhängigkeit der Ist-Position des Zugfahrzeuges gespeichert. Anschließend ermittelt das Verfahren die Einhüllenden der Ist-Schleppkurve des zumindest einen Anhängers in Abhängigkeit der Ist-Position des fahrerlosen Transportsystems, insbesondere des Zugfahrzeuges. Das Verfahren ermittelt, ob sich die Einhüllende der Ist-Schleppkurve des zumindest einen Anhängers innerhalb des hindernisfreien Soll-Bereichs und/oder innerhalb des hindernisfreien Ist-Bereichs befindet wobei der hindernisfreie Ist-Bereich auf Grundlage der Ist-Positionen ermittelt wird. Der hindernisfreie Ist-Bereich kann so ermittelt werden, dass sich die Ist-Positionen der Hindernisse außerhalb des hindernisfreien Ist-Bereichs befinden.

Das Hindernissensorsystem kann an der Frontseite des Zugfahrzeuges angeordnet sein und den Bereich vor und neben dem Zugfahrzeug erfassen.

Das Verfahren erfordert keine Sensoren an den Anhängern und somit keine elektrischen Verbinder zwischen den Anhängern. Die Funktionsweise des Verfahrens beruht darauf, dass sich ein Hindernis nicht in Richtung des fahrenden fahrerlosen Transportsystems bewegt. Mit anderen Worten, wird ein Mensch in der Nähe des fahrerlosen Transportsystems erkannt, geht das Verfahren davon aus, dass sich der Mensch nicht in Richtung fahrerloses Transportsystem bewegt, wie beispielsweise in der Norm DIN EN 13849-zugrunde gelegt ist.

Das Verfahren ermittelt in Abhängigkeit von der geplanten Route die Einhüllenden der Schleppkurven des zumindest einen Anhängers. Anschließend wird mittels des Zugfahrzeuges geprüft, ob sich in diesem Bereich ein Hindernis befindet. Während des Fahrens der Kurve wird die Einhüllende der Schleppkurven zyklisch neu berechnet und es wird geprüft, ob der hindernisfreie Soll-Bereich und/oder der hindernisfreie Ist-Bereich ausreichend groß sind, so dass keine der Einhüllenden der Ist-Schleppkurve mit einem Hindernis kollidieren kann oder eine Unterschreitung eines optionalen Mindestabstandes auftritt. Der Mindestabstand kann so gewählt sein, wie es von den einschlägigen Normen gefordert wird. Bei einer Ausführungsform kann der Mindestabstand auch Null betragen.

Die Ist-Position des Zugfahrzeuges des fahrerlosen Transportsystems kann mittels eines odometrischen Verfahrens ermittelt werden, beispielsweise unter Berücksichtigung des Lenkwinkels des Zugfahrzeuges und der Anzahl von Umdrehungen zumindest eines Rades des Zugfahrzeuges. Das Zugfahrzeug kann seine Position auch mittels eines optoelektronischen Verfahrens, beispielsweise mittels eines Laserscanners, zumindest einer Kamera oder dergleichen, ermitteln.

Der Schritt des Ermittelns der Einhüllenden der Ist-Schleppkurve kann den optionalen Schritt des Ermittelns des Winkels der Deichsel zwischen dem Zugfahrzeug und dem ersten Anhänger hinter dem Zugfahrzeug umfassen. Dadurch wird lediglich ein Winkelsensor erforderlich, der am Zugfahrzeug angeordnet ist.

Der Schritt des Ermittelns von potentiellen Hindernissen mittels des am Zugfahrzeug angeordneten Hindernissensorsystems kann den Schritt des Übermittelns eines Überwachungsbereichs an das Hindernissensorsystem umfassen, der auf Grundlage des hindernisfreien Soll-Bereichs ermittelt wird. Auf Grundlage des hindernisfreien Soll-Bereichs können so genannte Schutzfelder an das Hindernissensorsystem übermittelt werden, innerhalb deren das Hindernissensorsystem nach Hindernissen sucht. Das Hindernissensorsystem meldet eine Abstandsunterschreitung, falls sich eine Ist-Position eines Hindernisses innerhalb des Überwachungsbereichs befindet. Dadurch kann die Zuverlässigkeit und die Auswertegeschwindigkeit des Hindernissensorsystems verbessert werden.

Falls beim Schritt des Ermittelns, ob sich die Einhüllende der Ist-Schleppkurve des zumindest einen Anhängers zuzüglich eines optionalen Mindestabstandes innerhalb des hindernisfreien Soll-Bereichs und/oder innerhalb des hindernisfreien Ist-Bereichs befindet, ermittelt wird, dass sich die Einhüllende der Ist-Schleppkurve des zumindest einen Anhängers zuzüglich eines Mindestabstandes nicht innerhalb des hindernisfreien Soll-Bereichs und/oder nicht innerhalb des hindernisfreien Ist-Bereichs befindet, wird das fahrerlose Transportsystem gebremst, um eine Kollision mit dem zumindest einem Hindernis zu vermeiden.

Vor dem Schritt des Beginnens der Kurvenfahrt kann das Zugfahrzeug seine Position gegenüber der Umgebung mittels eines Positionssensorsystems ermitteln. Die Position kann in einem beliebigen Koordinatensystem ermittelt werden, das auf eine Referenzposition in der Umgebung des Zugfahrzeuges bezogen ist, beispielsweise eine Relativposition in einem Welt-Koordinatensystem, das auf eine beliebige Referenz-Position in der Halle bezogen ist, in der sich der fahrerlose Transportsystem bewegt. Das Positionssensorsystem kann ein In-Door-GNNS (In-Door-GPS), ein optoelektronisches Sensorsystem, das Hindernissensorsystem oder ein beliebiges anderes Sensorsystem zur Ermittlung einer Position sein.

Das Verfahren kann ferner den Schritt des Ermittelns von Hindernissen vor dem Zugfahrzeug und/oder des hindernisfreien Ist-Bereichs mittels eines an der Vorderseite des Zugfahrzeuges angeordneten ersten Hindernissensorsystems aufweisen, das das Hindernissensorsystem oder einen Teil davon bildet, insbesondere den Schritt des Ermittelns von Hindernissen vor dem Zugfahrzeug mittels eines an der Vorderseite des Zugfahrzeuges angeordneten ersten optoelektronischen Sensorsystems. Das erste Sensorsystem an der Vorderseite des Zugfahrzeuges kann beispielsweise ein Laserscanner, eine Kamera oder eine Mehrzahl Kameras aufweisen. Bei einer Ausführungsform kann das an der Vorderseite des Zugfahrzeuges angeordnete erste Hindernissensorsystem bzw. das an der Vorderseite des Zugfahrzeuges angeordnete erste optoelektronische Sensorsystem in einem ersten vorbestimmten Winkelbereich Hindernisse vor dem Zugfahrzeug erfassen. Bei einer anderen Ausführungsform kann das an der Vorderseite des Zugfahrzeuges angeordnete erste Hindernissensorsystem bzw. das an der Vorderseite angeordnete optoelektronische Sensorsystem auch Hindernisse vor und neben dem Zugfahrzeug in einem zweiten vorbestimmten Winkelbereich, der größer als der erste Winkelbereich ist, erfassen. Das an der Vorderseite des Zugfahrzeuges angeordnete erste Hindernissensorsystem kann zwei Sensoren aufweisen, die jeweils einen Teilbereich des ersten oder zweiten Winkelbereichs überwachen.

Das Verfahren kann den Schritt des Ermittelns des hindernisfreien Ist-Bereichs mittels eines zweiten Hindernissensorsystems umfassen, das zwei Sensoren aufweist, wobei je ein Sensor an jeder Seite des Fahrzeuges im Heckbereich angeordnet ist, wobei diese Sensoren optoelektronische Sensoren sein können. Vorzugsweise sind die Sensoren bzw. optoelektronischen Sensoren im Heckbereich des Zugfahrzeuges angeordnet.

Die Schritte des Verfahrens können zyklisch durchlaufen werden. Die Schritte des Verfahrens können auch durchlaufen werden, wenn nicht geplant ist, eine Kurve zu fahren. Dadurch können beispielsweise Daten über die Ist-Position von Hindernissen neben dem fahrerlosen Transportsystem gesammelt werden, um einem Hindernis vor dem fahrerlosen Transportsystem auszuweichen. Insbesondere können die Schritte des Ermittelns der Ist-Position von potentiellen Hindernissen mittels des zumindest einen am Zugfahrzeug angeordneten Hindernissensorsystems, des Ermittelns der Ist-Position des Zugfahrzeuges des fahrerlose Transportsystems, des Speicherns der Ist-Position eines Hindernisses und/oder des hindernisfreien Ist-Bereichs in Abhängigkeit der Ist-Position des Zugfahrzeuges, des Berechnens der Einhüllenden der Ist-Schleppkurve des zumindest einen Anhängers in Abhängigkeit der Ist-Position des fahrerlosen Transportsystems und/oder des Ermittelns, ob sich die Einhüllende der Ist-Schleppkurve des zumindest einen Anhängers zuzüglich eines optionalen Mindestabstandes innerhalb des hindernisfreien Soll-Bereichs und/oder innerhalb des hindernisfreien Ist-Bereichs befindet, wobei der hindernisfreie Ist-Bereich auf Grundlage der Ist-Positionen ermittelt wird, zyklisch durchgeführt werden.

Die Erfindung offenbart auch ein Computerprogrammprodukt, das, wenn es in einen Speicher eines Computers mit einem Prozessor geladen ist, die Schritte des zuvor beschriebenen Verfahrens durchführt.

Die Aufgabe der Erfindung wird auch durch ein automatisch fahrendes Zugfahrzeug, an das zumindest einen Anhänger angehängt werden kann, um ein automatisch fahrendes fahrerloses Transportsystem zu bilden, gelöst. Das automatisch fahrende Zugfahrzeug umfasst einen Traktionsmotor, der von einem Energiespeicher gespeist wird und das automatisch fahrende Zugfahrzeug antreibt. Ferner umfasst das automatisch fahrende Zugfahrzeug ein lenkbares Rad, dessen Lenkwinkel und Traktionsmotor durch eine Navigationssteuerungseinrichtung gesteuert wird. Ferner umfasst das Zugfahrzeug eine Ist-Positionsermittlungseinrichtung, die die Ist-Position des Zugfahrzeuges ermittelt. Ferner umfasst das automatisch fahrende Zugfahrzeug ein Hindernissensorsystem, das die Ist-Position von Hindernissen ermittelt. Ferner umfasst das automatisch fahrende Zugfahrzeug eine Hinderniserkennungseinrichtung, die dazu ausgebildet ist, die Schritte des zuvor beschriebenen Verfahrens auszuführen.

Das automatisch fahrende Zugfahrzeug kann so weitergebildet sein, wie zuvor hinsichtlich des Verfahrens beschrieben wurde. Ferner kann das Verfahren so weitergebildet sein, wie zuvor hinsichtlich des automatisch fahrenden Zugfahrzeuges beschrieben wurde.

Bei einer Ausführungsform ist das Hindernissensorsystem an der Vorderseite des Zugfahrzeuges angeordnet und überwacht den Bereich vor und/oder neben dem Zugfahrzeug hinsichtlich Hindernisse. Bei dieser Ausführungsform ist kein weiteres Hindernisüberwachungssystem erforderlich.

Die Ist-Positionsermittlungseinrichtung kann dazu ausgebildet sein, die Ist-Position des Zugfahrzeuges mittels odometrischer Daten zu ermitteln.

Alternativ oder zusätzlich kann das Hindernissensorsystem die Ist-Positionsermittlungseinrichtung umfassen.

Bei einer anderen Ausführungsform kann Ist-Positionsermittlungseinrichtung ein GNSS (GPS), ein In-Door-GNSS (In-Door-GPS) und/oder ein optoelektronisches Sensorsystem umfassen.

Durch die Verwendung von zwei unabhängigen Ist-Positionsermittlungssystemen kann die Sicherheit der automatischen selbstfahrenden Zugmaschine verbessert werden, beispielsweise im Hinblick auf die Erfüllung der Norm DIN EN 13849-1.

Bei einer Ausführungsform kann das Hindernissensorsystem zwei Sensoren aufweisen, wobei je ein Sensor an einer Seite des Zugfahrzeuges angeordnet ist, wobei jeder der Sensoren an der Seite des Zugfahrzeuges die Ist-Position von Hindernissen erfasst. Bei dieser Ausführungsform umfasst das automatisch fahrende Zugfahrzeug ferner die erste Ist-Positionsermittlungseinrichtung, die ein GNSS, ein In-Door-GNSS oder ein optoelektronisches Sensorsystem umfasst und die zweite Ist-Positionsermittlungseinrichtung, die dazu ausgebildet ist, die Ist-Position des Zugfahrzeuges mittels odometrischer Daten zu ermitteln.

Das automatisch fahrende Zugfahrzeug kann ferner eine optionale Deichselwinkelermittlungseinrichtung aufweisen, die dazu ausgebildet ist, den Deichselwinkel zwischen dem Zugfahrzeug und dem ersten Anhänger zu ermitteln.

Die Erfindung wird nun unter Bezugnahme auf die beigefügten Figuren detaillierter beschrieben, die nicht einschränkende Ausführungsformen der Erfindung beschreiben, wobei:

### Kurze Beschreibung der Figuren

Figur 1 ein fahrerloses Transportsystem mit einem erfindungsgemäßen Zugfahrzeug zeigt;
Figur 2 die Schleppkurven von einem fahrerlosen Transportsystem mit vier Anhängern bei einer ersten Kurve zeigt;
Figur 3 die Schleppkurven von einem fahrerlosen Transportsystem mit vier Anhängern bei einer zweiten Kurve zeigt;
Figur 4 ein Flussdiagramm des erfindungsgemäßen Verfahrens zeigt;
Figur 5 beispielhafte Umhüllenden der Schleppkurven und beispielhafte Schutzfelder zeigt;
Figur 6 eine weitere Ausführungsform des erfindungsgemäßen Zugfahrzeuges zeigt, bei der ein Hindernissensorsystem auch als Ist-Positionssensor fungiert;
Figur 7 noch eine weitere Ausführungsform des erfindungsgemäßen Zugfahrzeuges mit einem Hindernissensorsystem und einen separaten Ist-Positionssensor zeigt;
Figur 8 noch eine weitere Ausführungsform des erfindungsgemäßen Zugfahrzeuges zeigt, bei der das Hindernissensorsystem zwei an der Vorderseite angeordnete Sensoren aufweist; und
Figur 9 noch eine weitere Ausführungsform des erfindungsgemäßen Zugfahrzeuges zeigt, bei der das Hindernissensorsystem einen an der Vorderseite angeordneten Sensor und zwei den Seiten des Zugfahrzeuges angeordnete Sensoren aufweist.

### Detaillierte Beschreibung der Figuren

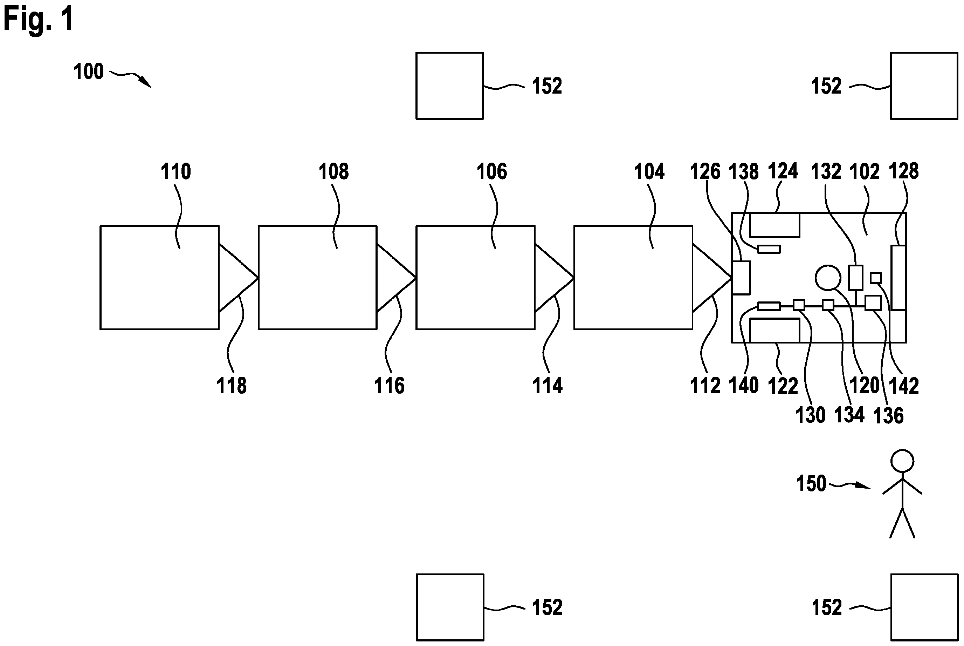

Figur 1 zeigt eine schematische Darstellung eines fahrerlosen Transportsystems 100 mit einem Zugfahrzeug, einem ersten Anhänger 104, der mittels einer ersten Deichsel 112 mit dem Zugfahrzeug gekoppelt ist, einem zweiten Anhänger 106, der mittels einer zweiten Deichsel 114 mit dem ersten Anhänger gekoppelt ist, und einem dritten Anhänger 108, der mittels einer dritten Deichsel 116 mit dem zweiten Anhänger gekoppelt ist, und einem vierten Anhänger 110, der mittels einer vierten Deichsel 118 mit dem dritten Anhänger gekoppelt ist. Routenzüge sind dem Fachmann bekannt und müssen hierin nicht mehr weiter beschrieben werden.

Das Zugfahrzeug umfasst ein erstes optoelektronisches Sensorsystem 120, das die Ist-Position des Zugfahrzeuges 102 im Raum bestimmt, beispielsweise mittels Erkennung von Gebäudebestandteilen 152 (Säulen). Derartige Positionsbestimmungsverfahren sind dem Fachmann bekannt und müssen hierin nicht genauer beschrieben werden. Die Ist-Position kann beispielsweise mittels spiegelbasiert über Laser-Triangulation, SLAM (Simultaneous Localization and Mapping) oder dergleichen ermittelt werden.

Ferner umfasst das Zugfahrzeug ein zweites optoelektronisches Sensorsystem, das zwei optoelektronische Sensoren 122, 124 aufweist, die je an einer Seite des Zugfahrzeuges 102 angeordnet sind. Bei der in Figur 1 gezeigten Ausführungsform sind die optischen Sensoren 122, 124 des zweiten optoelektronischen Sensorsystems in dessen hinteren Bereich angeordnet. Die optoelektronischen Sensoren 122, 124 des zweiten optoelektronischen Sensorsystems sind dazu ausgebildet, Hindernisse zu erkennen, mit denen einer der Anhänger 104, 106, 108, 110 bei einer Kurvenfahrt kollidieren kann bzw. zu diesem einen vorgeschriebenen Mindestabstand unterschritten werden könnte. Hindernisse umfassen beispielsweise die Säulen 152 oder eine Person 154. Das Zugfahrzeug umfasst einen dritten optoelektronischen Sensor 128, der den Bereich vor dem Zugfahrzeug 102 überwacht, um eine Kollision mit einem Hindernis, beispielsweise einer Person 154 zu vermeiden.

Die zuvor beschriebenen optoelektronischen Sensoren können Laserscanner oder eine Mehrzahl CCD-Kameras umfassen.

Das Zugfahrzeug 102 umfasst ferner eine Navigationssteuerungseinrichtung 134, die den Traktionsmotor 132 und ein lenkbares Vorderrad 142 so steuert, dass das Zugfahrzeug 102 und das fahrerlose Transportsystem 100 ein vorbestimmtes Ziel über eine vorbestimmte Route erreicht. Der Traktionsmotor 132 treibt das Vorderrad 142 an. Das Zugfahrzeug 102 umfasst ferner zwei nicht angetriebene Hinterräder 138, 140.

Ferner umfasst das Zugfahrzeug 102 eine Hinderniserkennungseinrichtung 136, die mit den optoelektronischen Sensoren 122, 124 des zweiten optoelektronischen Sensorsystems und einer optionalen Deichselwinkelermittlungseinrichtung 126 zusammenarbeitet. Die Deichselwinkelermittlungseinrichtung 126 ermittelt den Winkel der Deichsel 112 des ersten Anhängers 104 gegenüber dem Zugfahrzeug.

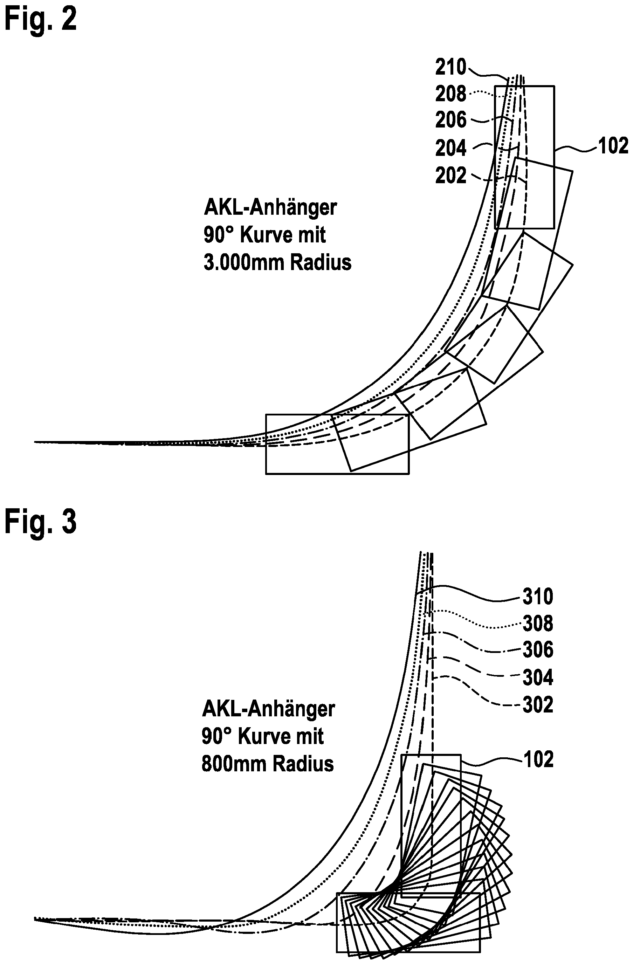

Es wird auf Figur 2 Bezug genommen, die eine Mehrzahl Schleppkurven eines fahrerlosen Transportsystems mit einer Mehrzahl Anhänger zeigt. Das Zugfahrzeug 102 erzeugt die Schleppkurve 202, die die Kurve des Mittelpunktes der Hinterachse des Zugfahrzeuges 102 beschreibt. Die Schleppkurve 204 zeigt die Schleppkurve des Mittelpunkt der Achse bzw. Hinterachse des ersten Anhängers, die Schleppkurve 206 ist die Schleppkurve des Mittelpunktes der Achse bzw. Hinterachse des zweiten Anhängers, die Schleppkurve 208 ist die Schleppkurve des Mittelpunkt der Achse bzw. Hinterachse dritten Anhängers, und die Schleppkurve 210 ist die Schleppkurve des Mittelpunktes des Mittelpunktes der Achse bzw. Hinterachse des vierten Anhängers. In Figur 2 ist eine Kurve mit einem Kurvenwinkel von etwa 90° und einen Radius von etwa 3,00 m gezeigt.

Es wird auf Figur 3 Bezug genommen, in der die Schleppkurven des gleichen fahrerlosen Transportsystems 100 bei einer Kurve von etwa 90° mit einem Radius von 0,80 m gezeigt sind. Die Schleppkurve 302 entspricht der Schleppkurve des Mittelpunkt der Hinterachse des Zugfahrzeuges 102, die Schleppkurve 304 entspricht der Schleppkurve des Mittelpunkts der Achse bzw. Hinterachse des ersten Anhängers, die Schleppkurve 306 entspricht der Schleppkurve des Mittelpunkts der Achse bzw. Hinterachse des zweiten Anhängers, die Schleppkurve 308 entspricht der Schleppkurve des Mittelpunkts der Achse bzw. Hinterachse des dritten Anhängers und die Schleppkurve 310 entspricht der Schleppkurve des Mittelpunkts der Achse bzw. Hinterachse des vierten Anhängers.

Wie aus Figuren 2 und 3 erkannt werden kann, weicht die Schleppkurve eines Anhängers in Abhängigkeit vom Abstand zum Zugfahrzeug zunehmend von derjenigen des Zugfahrzeuges ab. Ferner weicht die Schleppkurve eines Anhängers zunehmend von derjenigen des Zugfahrzeuges ab, je kleiner der Radius der Kurve und desto größer der Kurvenwinkel ist.

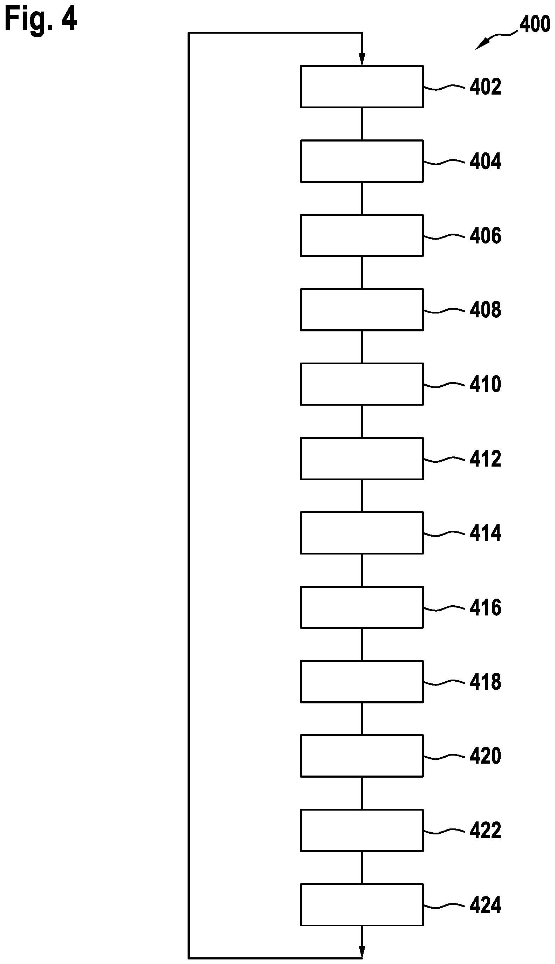

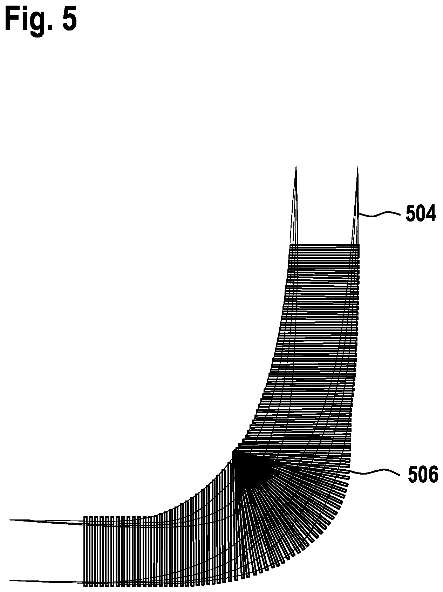

Es wird auf Figur 4, die ein Ablaufdiagramm des erfindungsgemäßen Verfahrens zeigt, und Figur 5 Bezug genommen, die beispielhafte Schutzfelder und Einhüllende von Schleppkurven zeigt. Im Schritt 402 ermittelt die Navigationssteuerungseinrichtung 134 den geplanten Weg 202, 302, den das Zugfahrzeug 102 zurücklegen soll, als Soll-Positionen (Soll-Weg). Im Schritt 404 ermittelt die Hinderniserkennungseinrichtung 132 die Einhüllenden 504 (siehe Figur 5) der Soll-Schleppkurven 202-210, 302-310 jedes des zumindest einen Anhänger 104-110 auf Grundlage des geplanten Weges 502, der von der Navigationssteuerungseinrichtung 136 übergeben wurde. Im Schritt 406 ermittelt die Hinderniserkennungseinrichtung 136 den hindernisfreien Soll-Bereich, in dem sich kein Hindernis befinden darf, auf Grundlage des geplanten Soll-Weges (Soll-Positionen) und der Einhüllenden der Soll-Schleppkurve eines jeden der Anhänger. Der hindernisfreie Soll-Bereich wird als Funktion der Soll-Position ermittelt.

Die Schleppkurven können unter anderem nach den Verfahren von Halter, Schneider, Tenner, Marx, Schouten, Hammer, Osterloh, Guhlmann, Hauska, Everling/Schoss, Litzka oder Lentz/Buck berechnet werden. Als Einhüllende einer Schleppkurve wird im Rahmen dieser Offenbarung eine beliebige Schleppkurve einer äußeren Kontur eines Anhängers oder der Zugmaschine bezeichnet.

Im Schritt 408 wird die Ist-Position von potentiellen Hindernissen 152, 154 mittels zumindest eines am Zugfahrzeug 102 angeordneten Hindernissensors 122, 124 während der Fahrt des Zugfahrzeuges ermittelt. Bei einer Ausführungsform können so genannte Schutzfelder an den Hindernissensor übermittelt werden, in denen der Hindernissensor nach potentiellen Hindernissen sucht.

Im Schritt 410 wird die Ist-Position des Zugfahrzeuges 102 des fahrerlosen Transportsystems ermittelt. Die Ist-Position des Zugfahrzeuges kann mittels odometrischer Daten unabhängig vom ersten optoelektronischen Sensorsystem 120 ermittelt werden. Ferner ermittelt die optionale Deichselwinkelermittlungseinrichtung 126 optional den Winkel der ersten Deichsel zwischen dem Zugfahrzeug 102 und dem ersten Anhänger 104. Ferner werden die Ist-Position eines Hindernisses und/oder der hindernisfreie Ist-Bereich in Abhängigkeit der ermittelten Ist-Position des Zugfahrzeuges im Schritt 412 gespeichert.

Anschließend beginnt das fahrerlose Transportsystem 100 mit einer Kurvenfahrt. Im Schritt 414 ermittelt das Verfahren die Position von potentiellen Hindernissen 152, 154 mittels des zumindest einen am Zugfahrzeug 102 angeordneten Hindernissensors. Bei einer Ausführungsform kann die Position von potentiellen Hindernissen innerhalb der Schutzfelder ermittelt werden, die im Schritt 408 an den Hindernissensor übergeben wurden. Ferner wird im Schritt 418 die Ist-Position des Zugfahrzeuges 102 des fahrerlosen Transportsystems 100 ermittelt, beispielsweise mittels odometrischer Daten und dem Lenkwinkel des gelenkten Rades 142 des Zugfahrzeuges 102. Zusätzlich ermittelt die optionale Deichselwinkelermittlungseinrichtung 126 den Winkel der ersten Deichsel 112 zwischen dem Zugfahrzeug 102 und dem ersten Anhänger 104. Im Schritt 420 speichert das Verfahren die Ist-Position eines Hindernisses und/oder den hindernisfreien Ist-Bereich in Abhängigkeit der Ist-Position des Zugfahrzeuges 102, je nachdem welches Messergebnis der Hindernissensor 122, 124 liefert.

Im Schritt 422 berechnet das Verfahren die Einhüllende 504 der Ist-Schleppkurve 202-210, 302-310 des zumindest einen Anhängers 104-110 in Abhängigkeit von der Ist-Position des fahrerlosen Transportsystems.

Im Schritt 424 prüft bei einer Ausführungsform das Verfahren, ob sich die Einhüllende 504 der Ist-Schleppkurve 202-210, 302-310 des zumindest einen Anhängers zuzüglich eines optionalen Mindestabstandes innerhalb des hindernisfreien Soll-Bereichs 506 befindet. Dieser Schritt wird durchgeführt, wenn dem Hindernissensor 122, 124 im Schritt 408 ein so genanntes Schutzfeld übermittelt wurde, innerhalb dessen der Hindernissensor nach Hindernissen suchen soll. Im Sinne der Übersichtlichkeit wurde in Figur 5 das Schutzfeld eindimensional dargestellt.

Bei einer anderen Ausführungsform kann alternativ hierzu oder zusätzlich das Verfahren ermitteln, ob sich die Einhüllende 504 der Ist-Schleppkurve 202-210, 302-310 des zumindest einen Anhängers zuzüglich eines optionalen Mindestabstandes innerhalb des hindernisfreien Ist-Bereichs befindet. Diese Ausführungsform kann angewendet werden, wenn der Hindernissensor 122, 124 ein Hindernis ermittelt, das sich außerhalb des hindernisfreien Soll-Bereichs zuzüglich einer optionalen Toleranz befindet.

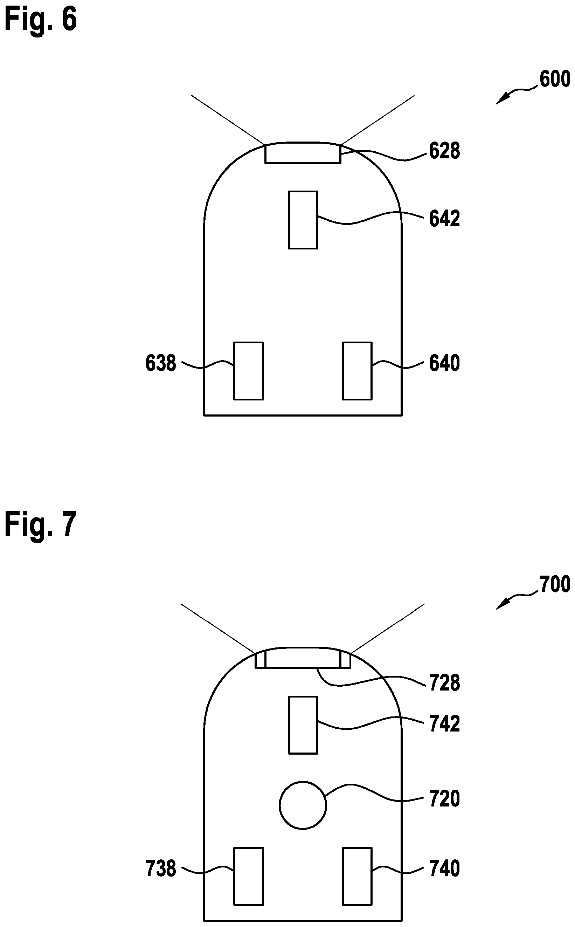

Es wird auf Figur 6 Bezug genommen, die eine Ausführungsform der Erfindung zeigt, bei der das Hindernissensorsystem 628 einen Sensor umfasst, der an der Vorderseite des Zugfahrzeuges 600 angeordnet ist. Das Hindernissensorsystem 628 ermittelt auch die Ist-Position des Zugfahrzeuges gegenüber der Umgebung, beispielsweise anhand von Gebäudebestandteilen oder Landmarken. Optional kann die ist-Position des Zugfahrzeuges 600 mittels odometrischer Daten ermittelt und/oder überwacht werden, die mittels zumindest eines der Räder 638, 640, 642 des Zugfahrzeuges 603 erfasst werden. Das Hindernissensorsystem 628 kann einen optoelektronischen Sensor umfassen.

Figur 7 zeigt eine Ausführungsform, bei der die Ist-Position mittels eines separaten Sensorsystems 720 ermittelt wird. Das Sensorsystems 728 zur Ermittlung der Ist-Position kann ein In-Door-GPS, ein optoelektronisches Sensorsystem, das mittels des Algorithmus SLAM ausgewertet wird oder dergleichen umfassen. Das Hindernissensorsystem 728 ermittelt die Ist-Position von Hindernissen vor und neben dem Zugfahrzeug 700. Die Ist-Position kann optional mittels odometrischer Daten ermittelt und/oder überwacht werden, die mittels zumindest eines der Räder 738, 740, 742 des Zugfahrzeuges 700 ermittelt werden.

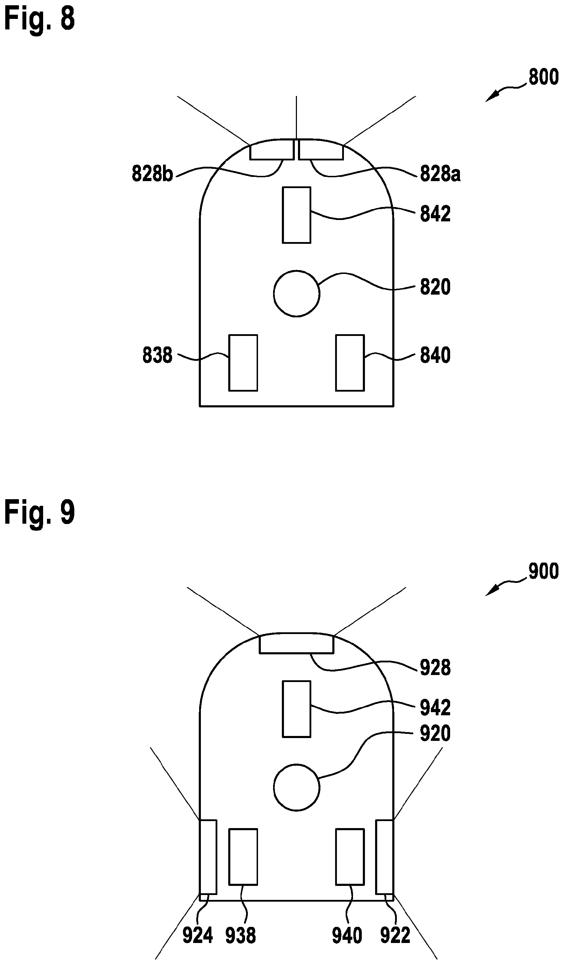

Figur 8 zeigt eine Ausführungsform, bei der das Hindernissensorsystem zwei Sensoren 828a, 828b umfasst, die an der Vorderseite des Zugfahrzeuges 800 angeordnet sind. Die Ist-Position wird bei dieser Ausführungsform so ermittelt, wie hinsichtlich der Ausführungsform von Figur 7 beschrieben wurde. Die Ist-Position kann optional mittels odometrischer Daten erfasst und/oder geprüft werden, die mittels zumindest eines der Räder 838, 840, 842 des Zugfahrzeuges 800 ermittelt werden.

Die Ausführungsform gemäß Figur 9 entspricht im Wesentlichen der Ausführungsform gemäß Figur 1, bei der das Hindernissensorsystem einen ersten Sensor 928 umfasst, der einen Bereich vor dem Zugfahrzeug 900 hinsichtlich Hindernisse überwacht. Das Hindernissensorsystem umfasst zwei Sensoren 922, 924, die je an einer Seite des Zugfahrzeuges 900 angeordnet sind und Hindernisse neben dem Zugfahrzeug 900 erfassen. Diese Ausführungsform ermittelt die Ist-Position so, wie hinsichtlich der Ausführungsform von Figur 7 beschrieben wurde. Optional kann die Ist-Position mittels odometrischer Daten ermittelt und/oder überwacht werden, die mittels zumindest eines der Räder 938, 940, 942 ermittelt werden.

Das erfindungsgemäße Verfahren berechnet einen hindernisfreien Sollbereich auf Grundlage der geplanten Route. Anschließend wird mittels zweier optoelektronischer Sensoren, die sich am seitlichen hinteren Bereich des Zugfahrzeuges befinden, ermittelt, ob sich Hindernisse im hindernisfreien Sollbereich befinden. Der hindernisfreie Soll-Bereich wird mittels prognostizierter Soll-Schleppkurven in Abhängigkeit von der geplanten Route (Soll-Position) ermittelt. Anschließend ermittelt das Verfahren die Ist-Position des Zugfahrzeuges 102 und anhand der Ist-Position des Zugfahrzeuges die Hüllkurve der Ist-Schleppkurven des zumindest einen Anhängers. Anschließend wird geprüft, ob sich die Einhüllenden der Ist-Schleppkurven innerhalb des hindernisfreien Ist-Bereichs und/oder innerhalb der Schutzfelder befinden, die als hindernisfreie Soll-Bereich von dem Hindernissensor erfasst wurden.

Die vorliegende Erfindung hat den Vorteil, dass keine Sensoren an den Anhängern 104-110 erforderlich sind. Dadurch lassen sich die Anhänger leichter an die Zugmaschine oder an bestehende Anhänger ankuppeln, ohne dass anfällige elektrische Steckverbinder verbunden und im Falle der Abkoppelung der Anhänger wieder gelöst werden müssen. Dadurch wird der Aufwand zum Herstellen eines fahrerlosen Transportsystems bzw. Anhängers reduziert. Ferner wird die Verfügbarkeit des fahrerlose Transportsysteme erhöht.

Das erfindungsgemäße fahrerlose Transportsystem kann in einem Lager, einer Produktionsumgebung oder dergleichen angewendet werden, beispielsweise um Bauteile aus einem Lager zu einem Roboter zu liefern, der aus einzelnen Bauteilen ein komplexes Bauteil bzw. Produkt montiert.

## Patentansprüche

1. Verfahren zum Prüfen, ob ein fahrerloses Transportsystem (100) mit einem Zugfahrzeug (102) mit einem Hindernissensorsystem (121, 124, 128) und zumindest einem Anhänger (104), eine Kurve fahren kann, ohne einen Mindestabstand zu einem Hindernis (152, 154) zu unterschreiten, wobei keiner der Anhänger einen Hindernissensor aufweist, **gekennzeichnet durch** die folgenden Schritte:
- Ermitteln des geplanten Weges (502), den das Zugfahrzeug (102) fahren soll, als Soll-Positionen (402);
- Ermitteln der Einhüllenden (504) von Soll-Schleppkurve (202-210, 302-310) jedes der zumindest einen Anhänger auf Grundlage der Soll-Positionen (404);
- Ermitteln eines hindernisfreien Soll-Bereiches (506), in dem sich kein Hindernis befinden darf, auf Grundlage der Soll-Positionen (502) und der Einhüllenden der Soll-Schleppkurve eines jeden der Anhänger, wobei der hindernisfreie Soll-Bereich als Funktion der Soll-Positionen berechnet wird (406); und
zyklischem Durchführen der folgenden Schritte:
- Ermitteln von Ist-Position von potentiellen Hindernissen (152, 154) mittels eines am Zugfahrzeug (102) angeordneten Hindernissensorsystems (122, 124, 128) (408);
- Ermitteln einer Ist-Position des Zugfahrzeuges (102) des fahrerlosen Transportsystems (410);
- Ermitteln des hindernisfreien Ist-Bereichs auf Grundlage der Ist-Position;
- Speichern der Ist-Position eines Hindernisses und/oder des hindernisfreien Ist-Bereichs in Abhängigkeit der Ist-Position des Zugfahrzeuges (412);
- Berechnen einer Einhüllenden (504) von Ist-Schleppkurven (202-210, 302-310) des zumindest einen Anhängers in Abhängigkeit der Ist-Position des Zugfahrzeuges (102) des fahrerlosen Transportsystems (100) und des Soll-Weges (422); und
- Ermitteln, ob sich die Einhüllende (504) der Ist-Schleppkurven (202-210, 302-310) des zumindest einen Anhängers zuzüglich eines optionalen Mindestabstandes innerhalb des hindernisfreien Soll-Bereichs (506) und/oder innerhalb des hindernisfreien Ist-Bereichs befindet, wobei der hindernisfreie Ist-Bereich auf Grundlage der Ist-Positionen der Hindernisse (152, 154) ermittelt wird (424).

2. Verfahren nach Anspruch 1, **dadurch gekennzeichnet, dass** der Schritt des Ermittelns der Ist-Position des Zugfahrzeuges des fahrerlosen Transportsystems zumindest einen der folgenden Schritte umfasst:
- Ermitteln der Ist-Position des Zugfahrzeuges mittels eines odometrischen Verfahrens;
- Ermitteln der Ist-Position des Zugfahrzeuges mittels eines optoelektronischen Verfahrens;
- Ermitteln der Ist-Position des Zugfahrzeuges mittels eines GNSS; und/oder
- Ermitteln der Ist-Position des Zugfahrzeuges mittels eines In-Door-GNSS.

3. Verfahren nach Anspruch 1 oder 2, **dadurch gekennzeichnet, dass** der Schritt des Ermittelns von potentiellen Hindernissen mittels des am Zugfahrzeug angeordneten Hindernissensorsystems, den Schritt des Übermittelns eines Überwachungsbereichs an das Hindernissensorsystem umfasst, der auf Grundlage des hindernisfreien Soll-Bereichs ermittelt wird.

4. Verfahren nach einem der Ansprüche 1 bis 3, **dadurch gekennzeichnet, dass**, falls beim Schritt des Ermittelns, ob sich die Einhüllende der Ist-Schleppkurve des zumindest einen Anhängers zuzüglich eines Mindestabstandes innerhalb des hindernisfreien Soll-Bereichs und/oder innerhalb des hindernisfreien Ist-Bereichs befindet, ermittelt wird, dass sich die Einhüllende der Ist-Schleppkurve des zumindest einen Anhängers zuzüglich eines Mindestabstandes nicht innerhalb des hindernisfreien Soll-Bereichs und/oder nicht innerhalb des hindernisfreien Ist-Bereichs befindet, Durchführen des Schritts des Bremsens des fahrerlosen Transportsystems.

5. Verfahren nach einem der Ansprüche 1 bis 4, **gekennzeichnet durch** folgenden Schritt:
- Bestimmen der Position des Zugfahrzeuges gegenüber der Umgebung mittels eines Positionssensorsystems vor dem Schritt des Beginnens der Kurvenfahrt.

6. Verfahren nach einem der Ansprüche 1 bis 5, **gekennzeichnet durch** zumindest einen der folgenden Schritte:
- Ermitteln von Hindernissen vor dem Zugfahrzeug und/oder des hindernisfreien Ist-Bereichs mittels eines an der Vorderseite des Zugfahrzeuges angeordneten ersten Hindernissensorsystems, das das Hindernissensorsystem oder einen Teil davon bildet;
- Ermitteln von Hindernissen vor dem Zugfahrzeug und/oder des hindernisfreien Ist-Bereichs mittels eines an der Vorderseite des Zugfahrzeuges angeordneten ersten optoelektronischen Sensorsystems, das das Hindernissensorsystem oder einen Teil davon bildet.

7. Verfahren nach einem der Ansprüche 1 bis 6, **dadurch gekennzeichnet, dass** der Schritt des Ermittelns des hindernisfreien Ist-Bereichs zumindest einen der folgenden Schritte aufweist:
- Ermitteln des hindernisfreien Ist-Bereichs mittels eines zweiten Hindernissensorsystems, das zwei Sensoren aufweist, wobei je ein Sensor an jeder Seite des Zugfahrzeuges angeordnet ist;
- Ermitteln des hindernisfreien Ist-Bereichs mittels des zweiten Hindernissensorsystems, das zwei optoelektronische Sensoren aufweist, wobei je ein optoelektronischer Sensor an jeder Seite des Zugfahrzeuges angeordnet ist.

8. Automatisch fahrendes Zugfahrzeug, an das zumindest ein Anhänger angehängt werden kann, um ein automatisch fahrendes fahrerloses Transportsystem zu bilden, aufweisend:
- zumindest einen Traktionsmotor, der von einem Energiespeicher gespeist wird, der das automatisch fahrende Zugfahrzeug antreibt;
- zumindest ein lenkbares Rad, dessen Lenkwinkel durch eine Navigationssteuerungseinrichtung (134) gesteuert wird;
- eine Ist-Positionsermittlungseinrichtung, die die Ist-Position des Zugfahrzeuges ermittelt;
- ein Hindernissensorsystem (122, 124, 128), das die Ist-Position von Hindernissen ermittelt; und
- eine Hinderniserkennungseinrichtung (136), die **dadurch gekennzeichnet ist, dass** sie dazu ausgebildet ist, die Schritte des Verfahrens nach einem der Ansprüche 1 bis 7 auszuführen.

9. Automatisch fahrendes Zugfahrzeug nach Anspruch 8, **dadurch gekennzeichnet, dass** das Hindernissensorsystem an der Vorderseite des Zugfahrzeuges angeordnet ist und den Bereich vor und/oder neben dem Zugfahrzeug hinsichtlich Hindernisse überwacht.

10. Automatisch fahrendes Zugfahrzeug nach Anspruch 8 oder 9, **dadurch gekennzeichnet, dass** die Ist-Positionsermittlungseinrichtung, dazu ausgebildet ist, die Ist-Position des Zugfahrzeuges mittels odometrischer Daten zu ermitteln.

11. Automatisch fahrendes Zugfahrzeug nach einem der Ansprüche 8 bis 10, **dadurch gekennzeichnet, dass**
- das Hindernissensorsystem (122, 124, 128) die Ist-Positionsermittlungseinrichtung umfasst.

12. Automatisch fahrendes Zugfahrzeug nach einem der Ansprüche 8 bis 11, **dadurch gekennzeichnet, dass**
- die Ist-Positionsermittlungseinrichtung ein GNSS umfasst;
- die Ist-Positionsermittlungseinrichtung ein In-Door-GNSS umfasst;
- ein optoelektronisches Sensorsystem umfasst.

13. Automatisch fahrendes Zugfahrzeug nach einem der Ansprüche 8 bis 12, **dadurch gekennzeichnet, dass** das Hindernissensorsystem (122, 124, 128) zwei Sensoren aufweist, wobei je ein Sensor an einer Seite des Zugfahrzeuges angeordnet ist, wobei jeder der Sensoren an der Seite des Zugfahrzeuges die Ist-Position von Hindernissen erfasst.

14. Automatisch fahrendes Zugfahrzeug nach Anspruch 8, **dadurch gekennzeichnet, dass**
- das Hindernissensorsystem (122, 124, 128) zwei Sensoren aufweist, wobei je ein Sensor an einer Seite des Zugfahrzeuges angeordnet ist, wobei jeder der Sensoren an der Seite des Zugfahrzeuges die Ist-Position von Hindernissen erfasst;
- die erste Ist-Positionsermittlungseinrichtung ein GNSS, ein In-Door-GNSS oder ein optoelektronisches Sensorsystem umfasst; und
- die zweite Ist-Positionsermittlungseinrichtung, dazu ausgebildet ist, die Ist-Position des Zugfahrzeuges mittels odometrischer Daten zu ermitteln.

## Claims

1. A method for checking whether a driverless transport system (100) comprising a towing vehicle (102) with an obstacle sensor system (121, 124, 128) and at least one trailer (104), can drive a curve without falling below a minimum distance to an obstacle (152, 154), wherein none of the trailers comprises an obstacle sensor, **characterized by** the following steps:
- determining the intended path (502) to be traveled by the towing vehicle (102) as set positions (402);
- determining the envelope (504) of set tow paths (202-210, 302-310) of each of the at least one trailer based on the set positions (404);
- determining an obstacle-free set range (506) in which no obstacle may be located based on the set positions (502) and the envelopes of the set trajectory of each of the trailers, wherein the obstacle-free set range is calculated as a function of the set positions (406); and cyclically performing the following steps:
- determining actual positions of potential obstacles (152, 154) using an obstacle sensing system (122, 124, 128) disposed on the towing vehicle (102) (408);
- determining an actual position of the towing vehicle (102) of the driverless transportation system (410);
- determining the obstacle-free actual area based on the actual position;
- storing the actual position of an obstacle and/or the obstacle-free actual area based on the actual position of the towing vehicle (412);
- calculating an envelope (504) of actual towing curves (202-210, 302-310) of the at least one trailer as a function of the actual position of the towing vehicle (102) of the driverless transport system (100) and the set path (422); and
- determining whether the envelope (504) of the actual towing curves (202-210, 302-310) of the at least one trailer plus an optional minimum distance is within the obstacle-free set range (506) and/or within the obstacle-free actual range, wherein the obstacle-free actual range is determined (424) based on the actual positions of the obstacles (152, 154).

2. The method according to claim 1, **characterized in that** the step of determining the actual position of the towing vehicle of the driverless transport system comprises at least one of the following steps:
- determining the actual position of the towing vehicle by means of an odometric method;
- determining the actual position of the towing vehicle by means of an optoelectronic method;
- determining the actual position of the towing vehicle by means of a GNSS; and/or
- determining the actual position of the towing vehicle by means of an in-door GNSS.

3. The method according to claim 1 or 2, **characterized in that** the step of determining potential obstacles by means of the obstacle sensor system arranged on the towing vehicle comprises the step of transmitting to the obstacle sensor system a monitoring range which is determined on the basis of the obstacle-free set range.

4. The method according to any one of claims 1 to 3, **characterized in that**, if in the step of determining whether the envelope of the actual towing curve of the at least one trailer plus a minimum distance is within the obstacle-free set range and/or within the obstacle-free actual range, it is determined that the envelope of the actual towing curve of the at least one trailer plus a minimum distance is not within the obstacle-free desired range and/or is not within the obstacle-free actual range, performing the step of braking the driverless transport system.

5. The method according to any one of claims 1 to 4, **characterized by** the following step:
- determining the position of the towing vehicle with respect to the surroundings by means of a position sensor system before the step of starting the turn.

6. The method according to any one of claims 1 to 5, **characterized by** at least one of the following steps:
- determining obstacles in front of the towing vehicle and/or the obstacle-free actual area by means of a first obstacle sensor system arranged at the front of the towing vehicle, which forms the obstacle sensor system or a part thereof;
- determining obstacles in front of the towing vehicle and/or the obstacle-free actual area by means of a first optoelectronic sensor system arranged at the front of the towing vehicle, which forms the obstacle sensor system or a part thereof.

7. The method according to one of claims 1 to 6, **characterized in that** the step of determining the obstacle-free actual area comprises at least one of the following steps:
- determining the obstacle-free actual area by means of a second obstacle sensor system comprising two sensors, one sensor being arranged on each side of the towing vehicle;
- determining the obstacle-free actual area by means of the second obstacle sensor system, which has two optoelectronic sensors, one optoelectronic sensor being arranged on each side of the towing vehicle.

8. An driverless transport system to which at least one trailer can be attached to form an automatically driving driverless transport system, comprising:
- at least one traction motor powered by an energy storage device that drives the automatically driving traction vehicle;
- at least one steerable wheel whose steering angle is controlled by a navigation control device (134); and
- an actual position detection device that detects the actual position of the towing vehicle;
- an obstacle sensing means (122, 124, 128) which detects the actual position of obstacles; and
- an obstacle detection device (136) **characterized in that** it is adapted to perform the steps of the method according to any one of claims 1 to 7.

9. The driverless transport system according to claim 8, **characterized in that** the obstacle sensor system is arranged at the front of the towing vehicle and monitors the area in front of and/or besides the towing vehicle with respect to obstacles.

10. The driverless transport system according to claim 8 or 9, **characterized in that** the actual position determination device is adapted to determine the actual position of the towing vehicle by means of odometric data.

11. The driverless transport system according to any one of claims 8 to 10, **characterized in that**
- the obstacle sensor system (122, 124, 128) comprises the actual position determination device.

12. The driverless transport system according to any one of claims 8 to 11, **characterized in that**
- the actual position determination device comprises a GNSS;
- the actual position determination device comprises an in-door GNSS;
- comprises an optoelectronic sensor system.

13. The driverless transport system according to any one of claims 8 to 12, **characterized in that** the obstacle sensor system (122, 124, 128) comprises two sensors, one sensor disposed on each side of the towing vehicle, each of the sensors on the side of the towing vehicle detecting the actual position of obstacles.

14. The driverless transport system according to claim 8, **characterized in that**
- the obstacle sensing system (122, 124, 128) comprises two sensors, one sensor disposed on each side of the towing vehicle, each of the sensors on the side of the towing vehicle sensing the actual position of obstacles;
- the first actual position detection means comprises a GNSS, an in-door GNSS or an optoelectronic sensor system; and
- the second actual position detection means is adapted to detect the actual position of the towing vehicle by means of odometric data.

## Revendications

1. Procédé pour vérifier si oui ou non un système de transport sans conducteur (100), qui comprend un véhicule tracteur (102) qui comporte un système de capteur(s) d'obstacles (121, 124, 128) et au moins une remorque (104), peut décrire une courbe en termes de conduite sont tomber en-deçà d'une distance minimum par rapport à un obstacle (152, 154), dans lequel aucune des remorques ne comprend un capteur d'obstacles, **caractérisé par** les étapes qui suivent :
- la détermination de la trajectoire prévue (502) qui est destinée à être parcourue par le véhicule tracteur (102) en tant que positions définies (402) ;
- la détermination de l'enveloppe (504) de trajectoires de traction définies (202 - 210, 302 - 310) de chacune des au moins une remorque sur la base des positions définies (404) ; et
- la détermination d'une plage définie exempte d'obstacles (506) à l'intérieur de laquelle aucun obstacle ne peut être localisé sur la base des positions définies (502) et des enveloppes de la trajectoire définie de chacune des remorques, dans lequel la plage définie exempte d'obstacles est calculée en tant que fonction des positions définies (406) ; et
la réalisation cyclique des étapes qui suivent :
- la détermination de positions réelles d'obstacles potentiels (152, 154) en utilisant un système de détection d'obstacles (122, 124, 128) qui est disposé sur le véhicule tracteur (102) (408) ;
- la détermination d'une position réelle du véhicule tracteur (102) du système de transport sans conducteur (410) ;
- la détermination de la zone réelle exempte d'obstacles sur la base de la position réelle ;
- le stockage de la position réelle d'un obstacle et/ou de la zone réelle exempte d'obstacles sur la base de la position réelle du véhicule tracteur (412) ;
- le calcul d'une enveloppe (504) de courbes de traction réelles (202 - 210, 302 - 310) de l'au moins une remorque en tant que fonction de la position réelle du véhicule tracteur (102) du système de transport sans conducteur (100) et de la trajectoire définie (422) ; et
- la détermination de si oui ou non l'enveloppe (504) des courbes de traction réelles (202 - 210, 302 - 310) de l'au moins une remorque plus une distance minimum optionnelle s'inscrit à l'intérieur de la plage définie exempte d'obstacles (506) et/ou à l'intérieur de la plage réelle exempte d'obstacles, dans lequel la plage réelle exempte d'obstacles est déterminée (424) sur la base des positions réelles des obstacles (152, 154).

2. Procédé selon la revendication 1, **caractérisé en ce que** l'étape de détermination de la position réelle du véhicule tracteur du système de transport sans conducteur comprend au moins l'une des étapes qui suivent :
- la détermination de la position réelle du véhicule tracteur au moyen d'un procédé odométrique ;
- la détermination de la position réelle du véhicule tracteur au moyen d'un procédé optoélectronique ;
- la détermination de la position réelle du véhicule tracteur au moyen d'un GNSS ; et/ou
- la détermination de la position réelle du véhicule tracteur au moyen d'un GNSS intérieur.

3. Procédé selon la revendication 1 ou 2, **caractérisé en ce que** l'étape de détermination d'obstacles potentiels au moyen du système de capteur(s) d'obstacles qui est agencé sur le véhicule tracteur comprend l'étape de transmission au système de capteur(s) d'obstacles d'une plage de surveillance qui est déterminée sur la base de la plage définie exempte d'obstacles.

4. Procédé selon l'une quelconque des revendications 1 à 3, **caractérisé par**, si, au niveau de l'étape de détermination de si oui ou non l'enveloppe de la courbe de traction réelle de l'au moins une remorque plus une distance minimum s'inscrit à l'intérieur de la plage définie exempte d'obstacles et/ou à l'intérieur de la plage réelle exempte d'obstacles, il est déterminé que l'enveloppe de la courbe de traction réelle de l'au moins une remorque plus une distance minimum ne s'inscrit pas à l'intérieur de la plage souhaitée exempte d'obstacles et/ou ne s'inscrit pas à l'intérieur de la plage réelle exempte d'obstacles, la réalisation de l'étape de freinage du système de transport sans conducteur.

5. Procédé selon l'une quelconque des revendications 1 à 4, **caractérisé par** l'étape qui suit :
- la détermination de la position du véhicule tracteur par rapport aux espaces avoisinants au moyen d'un système de capteur(s) de position avant l'étape consistant à commencer à négocier le virage.

6. Procédé selon l'une quelconque des revendications 1 à 5, **caractérisé par** au moins l'une des étapes qui suivent :
- la détermination d'obstacles à l'avant du véhicule tracteur et/ou de la zone réelle exempte d'obstacles au moyen d'un premier système de capteur(s) d'obstacles qui est agencé à l'avant du véhicule tracteur, lequel système forme le système de capteur(s) d'obstacles ou une partie de celui-ci ; et
- la détermination d'obstacles à l'avant du véhicule tracteur et/ou de la zone réelle exempte d'obstacles au moyen d'un premier système de capteur(s) optoélectronique(s) qui est agencé à l'avant du véhicule tracteur, lequel système forme le système de capteur(s) d'obstacles ou une partie de celui-ci.

7. Procédé selon l'une quelconque des revendications 1 à 6, **caractérisé en ce que** l'étape de détermination de la zone réelle exempte d'obstacles comprend au moins l'une des étapes qui suivent :
- la détermination de la zone réelle exempte d'obstacles au moyen d'un second système de capteur(s) d'obstacles qui comprend deux capteurs, un capteur étant agencé sur chaque côté du véhicule tracteur ; et
- la détermination de la zone réelle exempte d'obstacles au moyen du second système de capteur(s) d'obstacles, lequel système comporte deux capteurs optoélectroniques, un capteur optoélectronique étant agencé sur chaque côté du véhicule tracteur.

8. Système de transport sans conducteur auquel au moins une remorque peut être liée dans le but de former un système de transport sans conducteur à conduite automatique, comprenant :
- au moins un moteur de traction qui est alimenté au moyen d'un dispositif de stockage d'énergie qui réalise la conduite du véhicule de traction à conduite automatique ;
- au moins une roue directrice/un volant à fonction de direction dont l'angle de direction est commandé, contrôlé et régulé par un dispositif de commande, de contrôle et de régulation de navigation (134) ; et
- un dispositif de détection de position réelle qui détecte la position réelle du véhicule tracteur ;
- un moyen de détection d'obstacles (122, 124, 128) qui détecte la position réelle d'obstacles ; et
- un dispositif de détection d'obstacles (136), **caractérisé en ce qu'**il est adapté pour réaliser les étapes du procédé selon l'une quelconque des revendications 1 à 7.

9. Système de transport sans conducteur selon la revendication 8, **caractérisé en ce que** le système de capteur(s) d'obstacles est agencé à l'avant du véhicule tracteur et il surveille la zone à l'avant et/ou à côté du véhicule tracteur en ce qui concerne les obstacles.

10. Système de transport sans conducteur selon la revendication 8 ou 9, **caractérisé en ce que** le dispositif de détermination de position réelle est adapté pour déterminer la position réelle du véhicule tracteur au moyen de données odométriques.

11. Système de transport sans conducteur selon l'une quelconque des revendications 8 à 10, **caractérisé en ce que** :
- le système de capteur(s) d'obstacles (122, 124, 128) comprend le dispositif de détermination de position réelle.

12. Système de transport sans conducteur selon l'une quelconque des revendications 8 à 11, **caractérisé en ce que** :
- le dispositif de détermination de position réelle comprend un GNSS ;
- le dispositif de détermination de position réelle comprend un GNSS intérieur ; et
- le dispositif de détermination de position réelle comprend un système de capteur(s) optoélectronique(s).

13. Système de transport sans conducteur selon l'une quelconque des revendications 8 à 12, **caractérisé en ce que** le système de capteur(s) d'obstacles (122, 124, 128) comprend deux capteurs, un capteur étant disposé sur chaque côté du véhicule tracteur, chacun des capteurs sur le côté du véhicule tracteur détectant la position réelle d'obstacles.

14. Système de transport sans conducteur selon la revendication 8, **caractérisé en ce que** :
- le système de détection d'obstacles (122, 124, 128) comprend deux capteurs, un capteur étant disposé sur chaque côté du véhicule tracteur, chacun des capteurs sur le côté du véhicule tracteur détectant la position réelle d'obstacles ;
- le premier moyen de détection de position réelle comprend un GNSS, un GNSS intérieur ou un système de capteur(s) optoélectronique(s) ; et
- le second moyen de détection de position réelle est adapté pour détecter la position réelle du véhicule tracteur au moyen de données odométriques.
